# EUROPEAN PATENT SPECIFICATION

(11) **EP 0 452 226 B1**
(45) Date of publication and mention of the grant of the patent: **09.07.1997**
(21) Application number: 91400984.0
(22) Date of filing: 12.04.1991
(51) Int. Cl.: G02B 7/10, H02P 8/00

(54) **Autofocus unit motor control circuit**
Autofokuseinheitmotorsteuerkreis
Circuit de commande du moteur d'un ensemble de mise au point automatique

(30) Priority: 13.04.1990 JP 98592/90
(43) Date of publication of application: 16.10.1991
(73) Proprietor: SONY CORPORATION, Tokyo (JP)
(72) Inventor: Maruyama, Shigehisa, c/o SONY CORPORATION, Tokyo (JP)
(74) Representative: Thévenet, Jean-Bruno

(56) References cited:
- US-A- 4 429 968
- US-A- 4 634 949
- PATENT ABSTRACTS OF JAPAN vol. 15, no. 139 (E-1053)9 April 1991 & JP-A-3 018 297
- PATENT ABSTRACTS OF JAPAN vol. 6, no. 200 (E-135)9 October 1982 & JP-A-57 110 099

## Description

### 1. Field of Utilization in Industry

The present invention relates to an autofocus unit motor control circuit which controls the rotation of a stepping motor in an autofocus unit which performs focusing by making a focus lens wobble by rotation of the stepping motor.

### 2. Description of the Related Art

In recent years, the mainstream in sharp focus detection systems for autofocus units of video cameras has become the "mountain climbing system" where the peak of the high pass component of a video signal is detected. This "mountain climbing" system moves the focus lens in the direction of the greater high pass component of the video signal while wobbling the focus lens slightly or moves the focus lens linearly to near the peak and then causes wobbling to move the focus lens to the peak position (see Japanese Patent Application No. 1-157554). A stepping motor is used for the drive of the focus lens due to the ease of control.

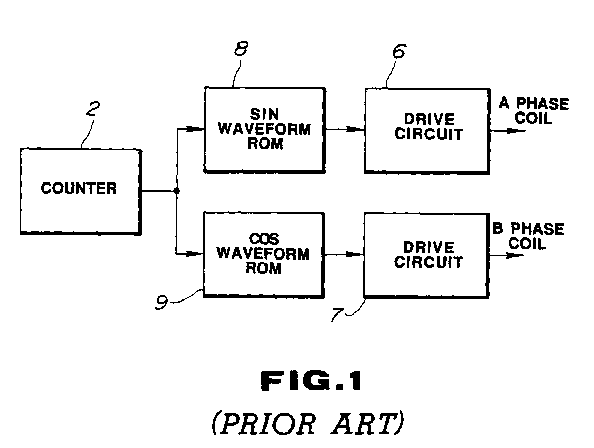

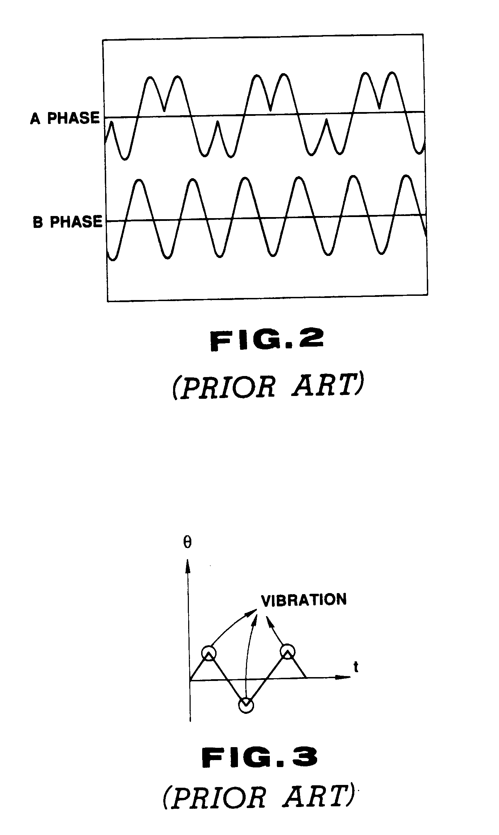

However, a stepping motor suffers from greater vibration compared with a DC motor, so to reduce the vibration, it has been considered to use a microstepping circuit. This microstepping circuit, as shown in Figure 1, has a counter 2 and a SIN waveform ROM 8 and a COS waveform ROM 9 which use the count of the counter 2 as a read signal, based on the data of the ROM's 8 and 9, the coils of the A phase and B phase being energized. When moving the focus lens in one direction, the drive current shown in Figure 8A is passed to the A phase and B phase and the rotor turned as shown in Figure 88 for rotation in one direction in a smooth manner with low vibration. When causing the focus lens to wobble, it is generally considered to pass drive current combining rotation in the forward and reverse directions as shown in Figure 2 to the A phase and B phase, whereupon the rotor turns in the forward and reverse directions as shown in Figure 3.

However, the switchover in directions of rotation of the rotor with respect to the time axis is sharp as shown in Fig.3, so a large vibration occurs at the point of switching for wobbling or large audio noise is generated.

The entry in respect of JP57-110099 in the journal Patent Abstracts of Japan [vol.15, no.139 (E-1053) 9 April 1991] describes a driving circuit for a multi-phase stepping motor. This driving circuit generates driving signals in a similar manner to the prior art circuit described above. A digital signal is generated and used as an address signal to read out sine and cosine waveforms from a ROM. The read-out signals are then fed to analog-to-digital converters before being supplied to the phase coils of the motor. The digital signal is the output from a counter and causes generation of regular sine and cosine driving waveforms.

US patent 4 634 949 describes a multi-phase stepping motor in which first and second sinusoidal driving waveforms are generated in quadrature with one another. A control device of this motor modifies the driving waveforms so as to reduce torque fluctuations and variations in shaft angular velocity which arise due to non-ideal behaviour of the motor and motor drive. Such torque variations at or near the system natural frequency would degrade performance of the element driven by the motor. The control device generates a signal proportional to the square root of the sum of the squares of the first and second driving voltages and uses this signal to modify the driving voltages.

### SUMMARY OF THE INVENTION

Therefore, the present invention has as its object the provision of an autofocus unit motor control circuit for an autofocus unit using a stepping motor for driving the focus lens which can perform wobbling smoothly and can reduce the vibration and audio noise.

For achieving the above object the present invention provides an autofocus unit motor control circuit for an autofocus unit having a stepping motor and a focus lens displaced in accordance with the turning of a rotor of the stepping motor, the rotor being rotatable in microsteps by passage of alternating current to coils of a plurality of phases thereof, the motor control circuit comprising:
memory means storing data indicative of values of current in the coils of the plurality of phases of the stepping motor at rotation stopping positions of the rotor of the stepping motor;
drive circuit means for outputting signals to energise the coils of said plurality of phases of the stepping motor based on values of current output by the memory means; and
an address generator for generating addresses for reading out values of current from said memory means and for causing said reading out from said memory means;
characterised in that the address generator is adapted to generate addresses to smooth a change in inclination of a path of rotor rotational angle with respect to a time axis at a switching point of direction of rotation of the rotor.

The present invention also provides an autofocus unit comprising:
a stepping motor having a rotor, the rotor being rotatable in microsteps by passage of alternating current to coils of a plurality of phases thereof;
a focus lens displaced in accordance with the turning of a rotor of the stepping motor; and
the autofocus unit motor control circuit described in the previous paragraph;
wherein displacement of the rotational angle of the rotor of the autofocus unit from the time axis takes the form of a sine waveform.

### BRIEF DESCRIPTION OF THE DRAWINGS

The above and other objects and features of the present invention will be more apparent from the following description of the preferred embodiments with reference to the accompanying drawings, wherein:
Figure 1 is a block diagram of a conventional motor control circuit;
Figure 2 is a diagram of the drive waveform at the time of wobbling;
Figure 3 is a graph of the rotor rotational angle at the time of wobbling;
Figure 4 is a block diagram of a motor control circuit according to the present invention;
Figure 5 is a block diagram of an autofocus unit;
Figure 6A to Figure 6C are views showing the content of data of the blocks of the address generating unit;
Figure 7A is a diagram of the drive waveform at the time of wobbling;
Figure 7B is a graph of the rotor rotational angle at the time of wobbling;
Figure 8A is a diagram of the drive waveform at the time of linear movement; and
Figure 8B is a graph of the rotor rotational angle at the time of linear movement.

### DESCRIPTION OF THE PREFERRED EMBODIMENTS

The gist of the invention is as follows: In the wobbling mode, an address generator sends to a memory an address which makes the inclination of the path of rotational angle gentler at the point of switching of rotational directions of the rotor and current data corresponding to this is read out from the memory to drive the motor, so the focus lens wobbles so that the displacement with respect to the time axis becomes, for example, a sine wave.

Below, an embodiment of the present invention will be explained using the drawings.

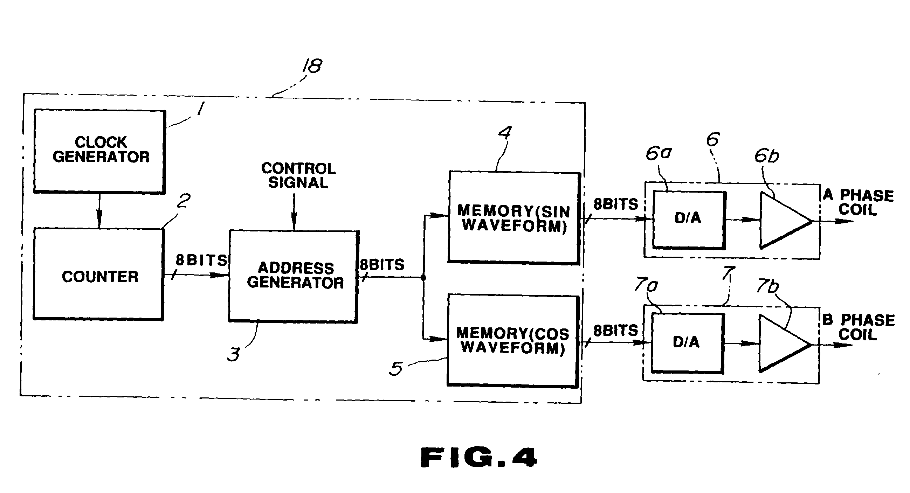

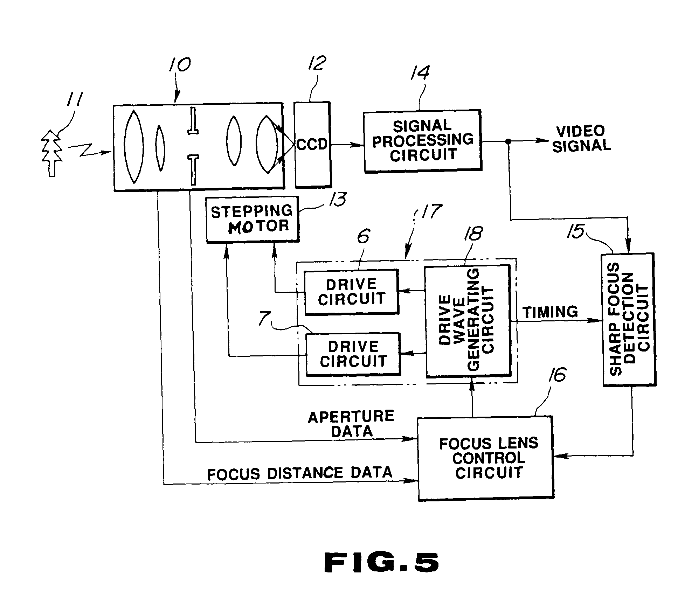

Figure 4 and Figure 5 show an embodiment of the present invention.

Figure 5 is a block diagram of an autofocus unit. In Figure 5, an optical processing unit 10 is provided with a zoom lens, focus lens, iris, etc. The image of an object 11 is formed at a solid state picture element (CCD) 12. The zoom lens and focus lens generally are comprised of a plurality of lens elements. The position of the zoom lens is changed by a zoom lens drive means (not shown), while the position of the stepping lens is changed by the driving force of a stepping motor 13.

The output video signal of the solid state picture element 12 is subjected to a certain processing by a signal processing circuit 14, and the processed video signal is led to a sharp focus detection circuit 15. The sharp focus detection circuit 15 has a high pass filter and detects the high pass component of the video signal. Further, the sharp focus detection circuit 15 detects the direction of movement of the focus lens with respect to the sharp focus position based on a timing signal of a drive waveform generating circuit 18 mentioned below. Specifically, the drive waveform generating circuit 18 outputs a timing signal at a predetermined phase timing at the time of wobbling and makes use of the fact that the phase of the high pass component level of the video signal with respect to the amplitude of wobbling of the focus lens differs before the sharp focusing and after the sharp focusing so as to detect the direction of movement.

A focus lens control circuit 16 has led to it high pass component level data of the sharp focus detection circuit 15 and movement direction data of the focus lens and has led to it aperture data and focal distance data from the optical processing unit 10. The focus lens control circuit 16 outputs a control signal to the motor control circuit 17 so that the high pass component level of the video signal peaks. Further, the aperture data and the focal distance data are used for controlling the amplitude of the wobbling in accordance with the depth of the picture field. The motor control circuit 17 is comprised of a drive waveform generating circuit 18 and drive circuits 6 and 7 of the A phase and B phase of the stepping motor 13. A block diagram of the motor control circuit 17 is shown in Figure 4.

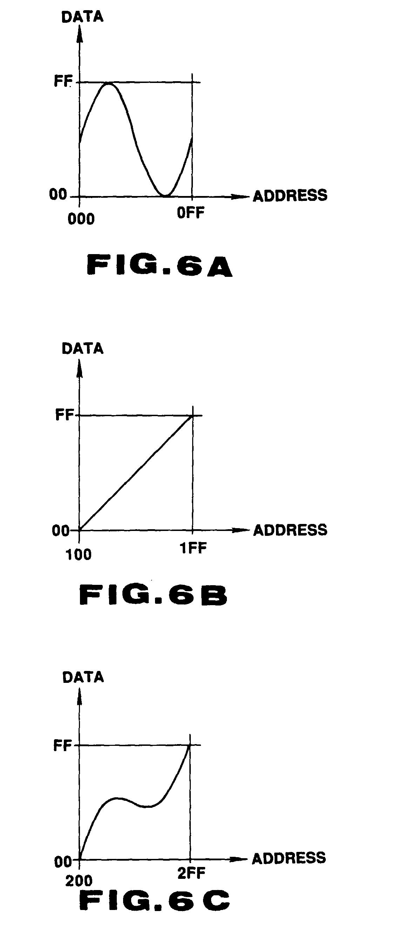

In Figure 4, the drive waveform generating circuit 18 has a clock generator 1, the output of the clock generator 1 being led to a counter 2. The counter 2 counts up the clock and outputs an 8-bit count value (0 to 255) to the address generator 3. The address generator 3 is comprised of a ROM which has stored in the A block of 000 to OFF address the address data of the characteristic curve shown in Figure 6A, in the B block 100 to 1FF address the address data of the characteristic curve shown in Figure 6B, and in the C block of 200 to 2FF address the address data of the characteristic curve shown in Figure 6C. As mentioned below, a rotational angle displacement (displacement of focus lens) with respect to the time axis corresponding to the characteristic curves is obtained, with the address generator 3 generating an address giving a sine wave with a gentle inclination of the path of rotational angle with respect to the time axis at the point of switching of the direction of rotation of the rotor. The output of the address data of one of the A, B and C blocks is selected by a control signal, and the address data of the address generator 3 are output to two memories 4 and 5. The memory 4 has current data giving a SIN waveform when the address data value is successively counted up (case shown in Figure 6A), while the memory 5 has current data giving a COS waveform when it is counted up. The outputs of the memories 4 and 5 are led to the drive circuits 6 and 7. The drive circuits 6 and 7 have D/A converters 6a and 7a and amplifiers 6b and 7b, with the outputs of the drive circuits 6 and 7 being supplied to the A phase coil and B phase coil of the stepping motor 13.

The focus lens is moved in the axial direction of the light by the driving force of the stepping motor 13, a correspondence being established between the rotational angle of the rotor of the stepping motor 13 and the amount of movement of the focus lens.

Below, an explanation will be made of the operation of the above structure.

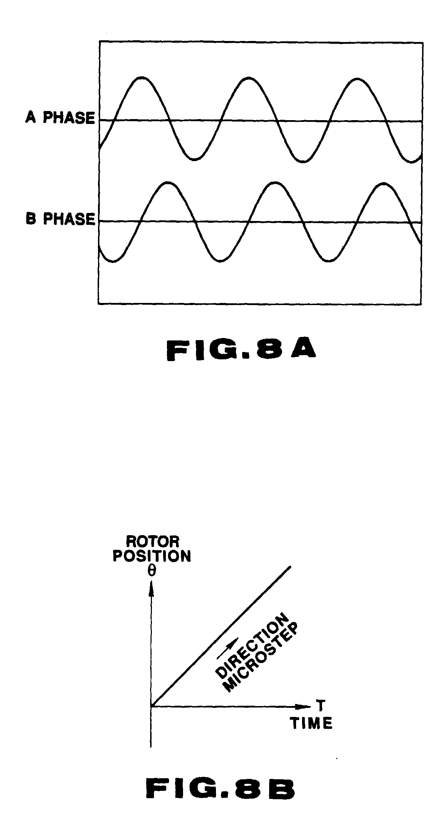

When the focus lens is moved linearly, the B block is selected by the control signal. When the B block is selected, the address generator 3 outputs the data shown in Figure 6B to the memories 4 and 5 according to the count of the counter 2. When this is done, the memories 4 and 5 use the data of the address generator 3 as a read signal and output current data based on the same. The drive current shown in Figure 8A is passed to the coils according to the current data, and the rotor turns as shown in Figure 8B to move the focus lens linearly in one direction.

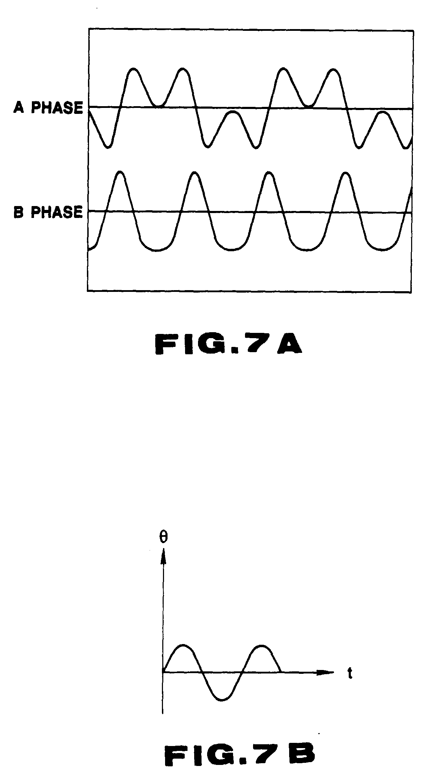

When wobbling the focus lens, the A block is selected by the control signal. When the A block is selected, the address generator 3 outputs the data shown in Figure 6A to the memories 4 and 5, the drive current shown in Figure 7A is passed to the coils, and the rotor turns as shown in Figure 7B to cause the focus lens to wobble. The wobbling forms a SIN waveform with respect to the time axis and the inversion movement of the focus lens becomes smooth, so the vibration is small and similarly the audio noise is small.

When moving the focus lens while causing it to wobble, the C block is selected by the control signal. When the C block is selected, the address generator 3 outputs the data shown in Figure 6C and the focus lens moves in one direction while wobbling. The wobbling at that time also forms a SIN waveform, so the vibration is low and the audio noise is low.

Further, in the embodiment, only three types of operations, shown in Figures 6A to 6C, could be selected, but other various types of operations are possible by modifying or adding to the content of the data of the address generator 3.

As explained above, the present invention provides an autofocus unit motor control circuit which microsteps a stepping motor to turn a rotor and drive a focus lens, which circuit has a memory which stores data on current values of a plurality of phases at rotation stopping position of the rotor, a drive circuit which energizes the phases based on the current data output by the memory, and an address generator which reads out the current data of the memory, the address generator generating an address which makes an inclination of a path of a rotational angle with respect to a time axis smoother at a switching point of direction of rotation of the rotor, whereby the wobbling of the focus lens becomes gentler and the vibration and audio noise, can be reduced.

## Claims

1. Autofocus unit motor control circuit (17) for an autofocus unit having a stepping motor and a focus lens displaced in accordance with the turning of a rotor of the stepping motor, the rotor being rotatable in microsteps by passage of alternating current to coils of a plurality of phases thereof, the motor control circuit (17) comprising:
memory means (4,5) storing data indicative of values of current in the coils of the plurality of phases of the stepping motor at rotation stopping positions of the rotor of the stepping motor;
drive circuit means (6,7) for outputting signals to energise the coils of said plurality of phases of the stepping motor based on values of current output by the memory means (4,5); and
an address generator (3) for generating addresses for reading out values of current from said memory means (4,5) and for causing said reading out from said memory means (4,5);
characterised in that the address generator is adapted to generate addresses to smooth a change in inclination of a path of rotor rotational angle with respect to a time axis at a switching point of direction of rotation of the rotor.

2. An autofocus unit comprising:
a stepping motor having a rotor, the rotor being rotatable in microsteps by passage of alternating current to coils of a plurality of phases thereof;
a focus lens displaced in accordance with the turning of a rotor of the stepping motor; and
an autofocus unit motor control circuit (17) according to claim 1;
wherein displacement of the rotational angle of the rotor of the autofocus unit from the time axis takes the form of a sine waveform.

## Patentansprüche

1. Autofokuseinheit-Motorsteuerschaltung (17) für eine Autofokuseinheit, die einen Schrittmotor und eine Fokuslinse hat, die gemäß der Drehbewegung eines Rotors des Schrittmotors versetzt wird, wobei der Rotor durch Durchlassen eines Wechselstroms zu mehreren Phasenwicklungen in Mikroschritten drehbar ist, wobei die Motorsteuerschaltung (17) umfaßt:
einen Speicher (4, 5), der Daten speichert, die für Stromwerte in den mehreren Phasenwicklungen des Schrittmotors bei Dreh-Stopp-Positionen des Rotors des Schrittmotors bezeichnend sind;
eine Ansteuerschaltung (6, 7) zur Ausgabe von Signalen, um die mehreren Phasenwicklungen des Schrittmotors auf der Basis der Stromwerte zu erregen, die durch den Speicher (4, 5) ausgegeben werden; und
einen Adreßgenerator (3), um Adressen zu erzeugen, um Stromwerte aus dem Speicher (4, 5) zu lesen und das Lesen aus dem Speicher (4, 5) zu veranlassen;
dadurch gekennzeichnet, daß
der Adreßgenerator ausgelegt ist, Adressen zu erzeugen, um eine Neigungsänderung einer Rotordrehwinkelbahn in bezug auf eine Zeitachse in einem Drehrichtungsumschaltpunkt des Rotors zu glätten.

2. Autofokuseinheit, die umfaßt:
einen Schrittmotor, der einen Rotor hat, wobei der Rotor in Mikroschritten durch Durchlassen eines Wechselstroms zu mehreren Phasenwicklungen drehbar ist;
eine Fokuslinse, die gemäß der Drehung eines Rotors des Schrittmotors versetzt wird; und
eine Autofokuseinheit-Motorsteuerschaltung (17) nach Anspruch 1,
wobei der Versatz des Drehwinkels des Rotors der Autofokuseinheit von der Zeitachse die Form einer Sinusschwingung annimmt.

## Revendications

1. Circuit (17) de commande de moteur d'ensemble de mise au point automatique, destiné à un ensemble de mise au point automatique possédant un moteur pas-à-pas et une lentille de mise au point qui est déplacée en fonction de la rotation d'un rotor du moteur pas-à-pas, le rotor pouvant tourner par micro-pas sous l'effet de la transmission d'un courant alternatif à des bobines d'une pluralité de phases de celui-ci, le circuit de commande de moteur (17) comprenant :
un moyen de mémorisation (4, 5) stockant des données indicatives de valeurs du courant dans les bobines de la pluralité de phases du moteur pas-à-pas en des positions d'arrêt de rotation du rotor du moteur pas-à-pas ;
un moyen formant un circuit d'excitation (6,7), qui sert à délivrer des signaux afin d'exciter les bobines de ladite pluralité de phases du moteur pas-à-pas sur la base de valeurs de courant délivrées par le moyen de mémorisation (4, 5) ; et
un générateur d'adresses (3) servant à produire des adresses permettant de lire des valeurs de courant dans ledit moyen de mémorisation (4, 5) et à faire effectuer ladite lecture dans ledit moyen de mémorisation (4, 5) ;
caractérisé en ce que le générateur d'adresses est conçu pour produire des adresses afin de régulariser le changement d'inclinaison du trajet de l'angle de rotation du rotor par rapport à l'axe temporel en un moment de changement de sens de rotation du rotor.

2. Ensemble de mise au point automatique, comprenant:
un moteur pas-à-pas possédant un rotor, le rotor pouvant tourner par micro-pas sous l'effet de la transmission d'un courant alternatif à des bobines d'une pluralité de phases de celui-ci ;
une lentille de mise au point, qui est déplacée en fonction de la rotation d'un rotor du moteur pas-à-pas ; et
un circuit (17) de commande de moteur d'ensemble de mise au point automatique selon la revendication 1 ;
où le déplacement de l'angle de rotation du rotor de l'ensemble de mise au point automatique par rapport à l'axe temporel prend la forme d'une forme d'onde sinusoïdale.
